# EUROPEAN PATENT SPECIFICATION

(11) **EP 1 876 090 B1**
(45) Date of publication and mention of the grant of the patent: **27.04.2011**
(21) Application number: 07252612.2
(22) Date of filing: 27.06.2007
(51) Int. Cl.: B62K 25/08, F16F 9/46, F16F 9/516

(54) **Hydraulic shock absorber and motorcycle**
Hydraulischer Stoßdämpfer und Motorrad
Absorbeur de choc hydraulique et motocyclette

(30) Priority: 07.07.2006 JP 2006187424
(43) Date of publication of application: 09.01.2008
(73) Proprietor: Yamaha Hatsudoki Kabushiki Kaisha, Iwata-shi, Shizuoka 438-8501 (JP)
(72) Inventor: Kawamura, Tsunehisa c/o Yamaha Hatsudoki K.K., Shizuoka-ken 438-8501 (JP)
(74) Representative: Lamb, Martin John Carstairs

(56) References cited:
- EP-A2- 1 077 175
- GB-A- 2 111 168
- GB-A- 2 126 687
- US-A- 4 776 437
- US-A- 5 277 283
- US-A- 5 988 330

## Description

### FIELD OF THE INVENTION

The present invention relates to a hydraulic shock absorber and a motorcycle provided with the hydraulic shock absorber. More particularly, the present invention relates to a hydraulic shock absorber and a motorcycle in which the damping force of the hydraulic shock absorber can be exerted more accurately.

### BACKGROUND TO THE INVENTION

Conventionally, motorcycles have a hydraulic shock absorber for suspending and holding a front wheel. The hydraulic shock absorber has a damper (buffer) device for absorbing gaps formed between the road surface and the front wheel, in addition to a function of steering the front wheel.

In general, the damper device is constituted of a coil spring for generating a pressing force and interposed between an outer tube and an inner tube of the hydraulic shock absorber which are slidable relative to each other.

It is known in the art to generate a damping force by controlling the amount of oil moving between a plurality of oil chambers located in an outer tube and an inner tube in an hydraulic shock absorber. As such a front fork capable of generating a damping force, a front fork capable of generating a compression-side damping force and an expansion-side damping force with a single damping valve is known, for example from JP 01-212689.

The front fork described in JP 01-212689 has a passage formed through a piston rod of a damper and communicated with an oil storage chamber defined on the side of an inner tube via a damping valve disposed above the inner tube with its piston side end opening into a rod-side oil chamber of the damper; a check valve provided on a damper piston for allowing hydraulic oil to flow from a counter-rod-side oil chamber to a rod-side oil chamber; and a check valve provided at the bottom of a cylinder for allowing hydraulic oil to flow from the oil storage chamber to the counter-rod-side oil chamber.

In the front fork described in JP 01-212689, the oil in the counter-rod-side oil chamber in the cylinder, which is contracted during compression-side operation, is caused to flow from the passage of the piston rod to the damping valve through the check valve of the piston and returned to the rod-side oil chamber, which is contracted during expansion-side operation, and the oil storage chamber to generate a compression-side damping force. During expansion-side operation, the oil in the oil storage chamber is allowed to flow freely into the counter-rod-side oil chamber via the check valve provided at the bottom of the cylinder and the oil in the rod-side oil chamber is caused to flow from the passage of the piston rod to the oil storage chamber through the damping valve.

In the front fork described in JP 01-212689, a compression-side damping force and an expansion-side damping force are generated with a single damping valve. Thus, the flow direction of oil is changed continuously in the damping valve. When the flow rate of oil through the damping valve is adjusted by an actuator, the damping force must be adjusted alternately on the expansion side and the compression side of the damper device. When the damping force is adjusted alternately as described above, a desired damping force is difficult to generate because of irregular flows of the oil and, consequently, comfortable running of the motorcycle is disturbed.

A telescopic fork is described in EP 1 077 175, in which a pair of left and right front forks are provided. Each telescopic fork has telescopically arranged tubes and arranged in the tubes are piston and rod arrangements. In the left fork a check valve unit is provided which includes a check valve in the form of a spring washer. A piston includes holes which are covered by a stiff shim stack. In use, the shim stack functions as a damping valve during high speed compression of the left fork, and permits flow in the same direction as the check valve. This arrangement therefore permits damping in a compression direction only.

In the right fork of EP 1 077 175, the check valve unit is omitted. A weak shim stack that permits flow in forward and reverse directions is provided.

An object of the present invention is, in view of the current situation, to provide a hydraulic shock absorber capable of generating a desired damping force more accurately and a motorcycle provided with the hydraulic shock absorber.

### SUMMARY OF THE INVENTION

Various aspects of the present invention are defined in the independent claim 1. Some preferred features are defined in the dependent claims.

Described herein is a hydraulic shock absorber according to claim 1.

The outer tube may support a wheel of the motorcycle, and the inner tube may be supported on the side of a body frame.

The actuator may comprise a stepping motor. The actuator may comprise a solenoid. The actuator may be provided in at least one of the first front fork and the second front fork.

Described herein is a motorcycle provided with a hydraulic shock absorber as described above.

According to the present invention, since a regulating mechanism is disposed in the flow path connecting the first oil chamber and the second oil chamber in the cylinder for permitting oil to flow only in one direction, only either compression-side damping or expansion-side damping can be performed by a damping adjustment part disposed in the flow path. Therefore, generation of irregular flows of oil at the damping adjustment part which interfere with desired damping force adjustment can be prevented effectively. As a result, according to the present invention, a hydraulic shock absorber capable of exerting a desired damping force more accurately and a motorcycle provided with the hydraulic shock absorber can be provided.

### BRIEF DESCRIPTION OF THE DRAWINGS

These and other aspects of the present invention will now be described, by way of example only, with reference to the accompanying drawings, in which:
FIG. 1 is a side view illustrating the general configuration of a motorcycle according to an embodiment of the present invention;
FIG. 2 is a side view illustrating the structure of a front part of the motorcycle of FIG. 1 in more detail;
FIG. 3 is a general cross-sectional view illustrating a first front fork of the motorcycle of FIG. 1;
FIG. 4 is a general cross-sectional view illustrating a second front fork of the motorcycle of FIG. 1;
FIG. 5 is a part cross-sectional view illustrating the flow of oil in the first front fork shown in FIG. 3; and
FIG. 6 is a part cross-sectional view illustrating the flow of oil in the second front fork of FIG. 4.

### DETAILED DESCRIPTION OF THE DRAWINGS

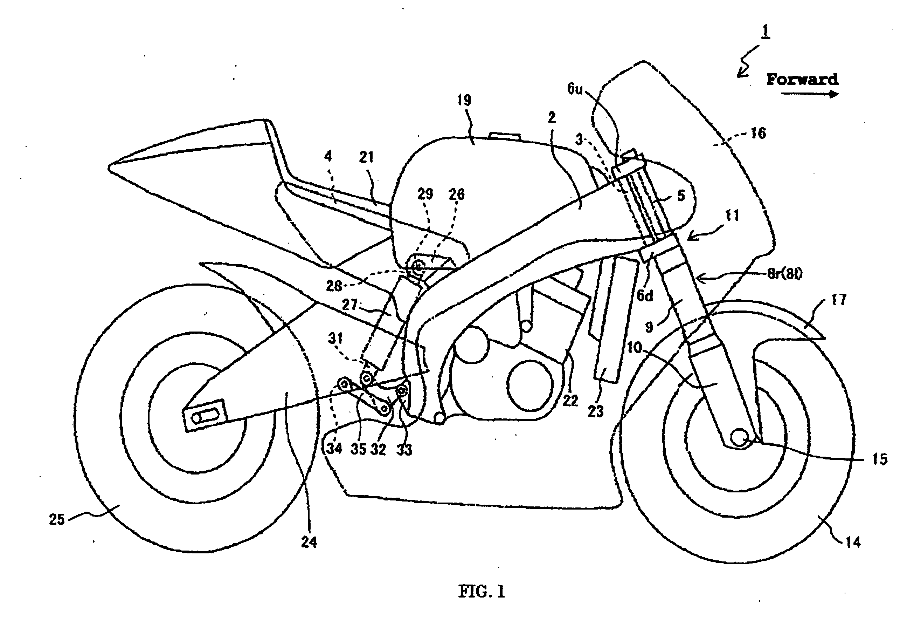

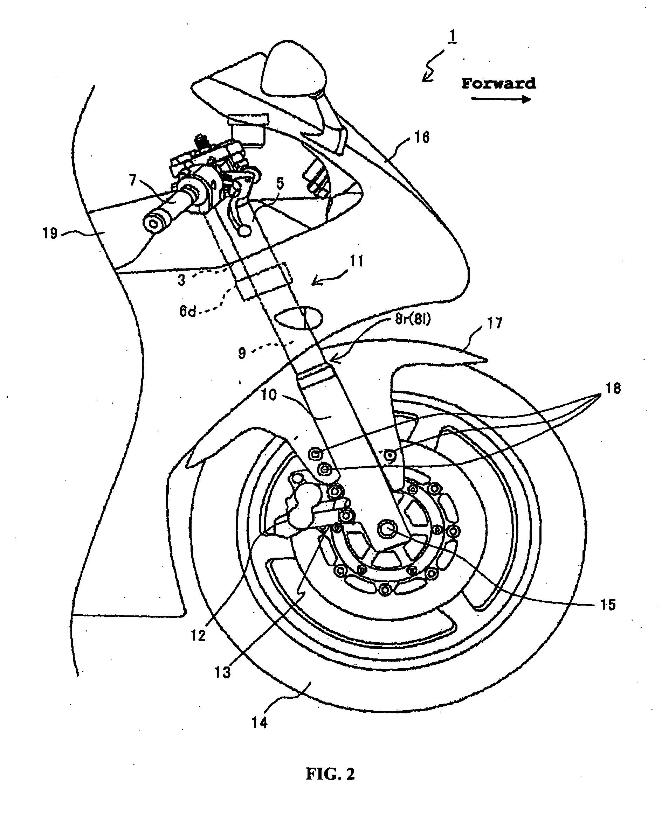

FIG. 1 is a side view illustrating the general configuration of a motorcycle according to an embodiment of the present invention. FIG. 2 is a side view illustrating the structure of a front part of the above motorcycle in more detail. In FIG. 1 and FIG. 2, the traveling direction of the motorcycle is indicated by the word "Forward" and an arrow.

As shown in FIG. 1 and FIG. 2, a motorcycle 1 has a main frame 2, a head pipe 3 secured to a front part of the main frame 2, and a seat rail 4 joined to a rear part of the main frame 2.

A body frame is formed by the main frame 2, the head pipe 3 and the seat rail 4. A steering shaft 5 is rotatably fitted in the head pipe 3.

Axle brackets 6u and 6d extending laterally are attached to top and bottom of the steering shaft 5. The axle brackets 6u and 6d are rotatable, together with the steering shaft 5, relative to the head pipe 3.

The steering shaft 5 is rotatable relative to the head pipe 3, and the vertical position of the steering shaft 5 in the head pipe 3 is fixed by the upper and lower axle brackets 6 (6u and 6d).

A handle bar (which is not shown in FIG. 1, and shielded by the various parts attached around the handle bar in FIG. 2) is fixedly attached to the upper axle bracket 6u, and grips 7 are fitted over both ends of the handle bar.

In addition, inner tubes 9 forming upper parts of a pair of right and left upright front forks 8 (8r and 81) are supported by the upper and lower axle brackets 6. The inner tubes 9 are fitted in outer tubes 10 for vertical sliding movement. Here, the front forks 8 are disposed as a part of a hydraulic shock absorber 11, and, in this embodiment, the hydraulic shock absorber 11 includes the axle brackets 6 in addition to the front forks 8.

The outer tubes 10 support a front wheel 14 via an axle 15 by an axle holding part (not shown). Therefore, the front wheel 14 is supported by the inner tubes 9 via the axle holding part and the outer tubes 10, and steerably connected to the handle bar via the axle brackets 6u and 6d.

In front of the head pipe 3, a windshield 16 made of, for example, a transparent resin for covering the front side of the head pipe 3 is provided. A front fender 17 for covering an upper part of the front wheel 14 is disposed below the windshield 16.

The front fender 17 is fixed at three fixing parts 18 to each of the outer tubes 10. Also, a brake caliper 12 is fixed to each of the outer tubes 10 at two caliper holding parts 13 and supported thereby.

The front fender 17 and the brake calipers 12 can thereby make vertical jumping movement, reciprocating or vibrating together with the front wheel 14 and the outer tubes 10.

A fuel tank 19 is located on the main frame 2 behind the head pipe 3. A seat 21 is disposed behind the fuel tank 19.

An engine 22 is attached below the main frame 2. A radiator 23 for cooling the cooling water for the engine 22 is disposed in front of the engine 22.

A rear arm 24 having a front part supported by a pivot shaft (not shown) of the main frame 2 is disposed behind the main frame 2 with its rear part swingable vertically. A rear wheel 25 is rotatably supported at the rear end of the rear arm 24.

A support part 26 is provided on an upper rear part of the main frame 2, and an upper attachment part 28 of a rear suspension 27 is engaged with the support part 26 via a rod member 29. A lower attachment part 31 of the rear suspension 27 is engaged with one end of a hook-shaped rocking member 32.

The other end of the rocking member 32 is engaged with a support part 33 formed on a lower rear part of the main frame 2, and a connecting member 35 is interposed between an intermediate part of the hook-shaped rocking member 32 and a support part 34 of the rear arm 24.

With this configuration, when the rear arm 24 is swung up and down with vertical jumping movement of the rear wheel 25, the part where the lower attachment part 31 of the suspension 27 is engaged with the rocking member 32 is swung up and down about the support part 33 of the main frame 2. The suspension 27 is thereby expanded and contracted to effect a damping action against the vertical jumping movement of the rear wheel 25.

In this embodiment, damper devices for effecting a damping action against vertical jumping movement of the front wheel 14 are constituted of piston rods, pistons, cylinders and so on, which are described later, in the inner tubes 9 and the outer tubes 10 of a pair of right and left front forks 8 (first front fork 8r and second front fork 81).

Since damper devices are provided in both of paired front forks 8 (8r and 81) located on both sides with respect to the vehicle traveling direction as described above, the damping action of the front forks 8 can be effectively effected in both the front forks 8.

In the embodiment shown, the paired right and left front forks 8 (8r and 81) are adapted to adjust the damping force on the expansion-side and the compression-side, respectively, so that the buffering function level (that is, damping force) of the damper devices can be adjusted based on the vehicle speed or settings, the details of which are described later.

It should be understood that "expansion-side" as used herein refers to an expansion stroking motion of the hydraulic shock absorber 11, and similarly "compression-side" refers to a compression stroking motion of the hydraulic shock absorber 11.

As will be described in further detail below, when a control means (not shown) such as an ECU (engine control unit) actuates a stepper or stepping motor as an actuator, which is described later, based on the speed of the motorcycle 1 and so on, the stepping motor moves a needle as a damping adjustment part up and down to adjust the damping force.

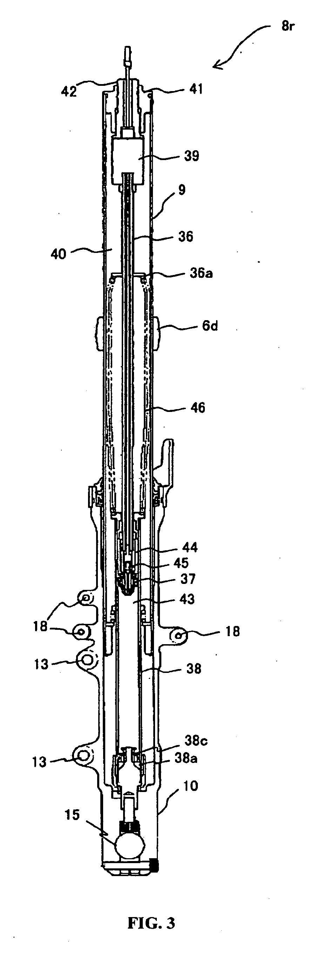

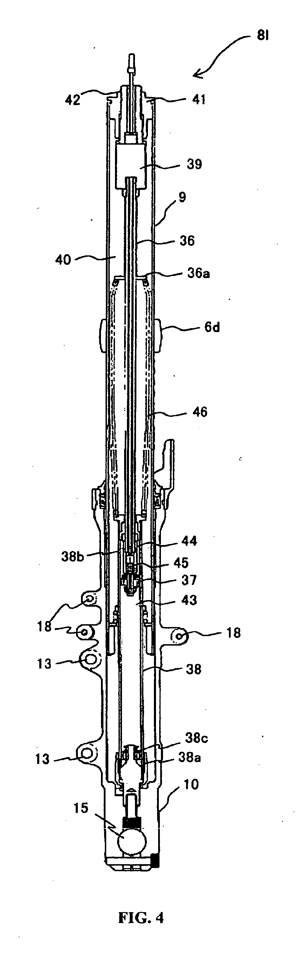

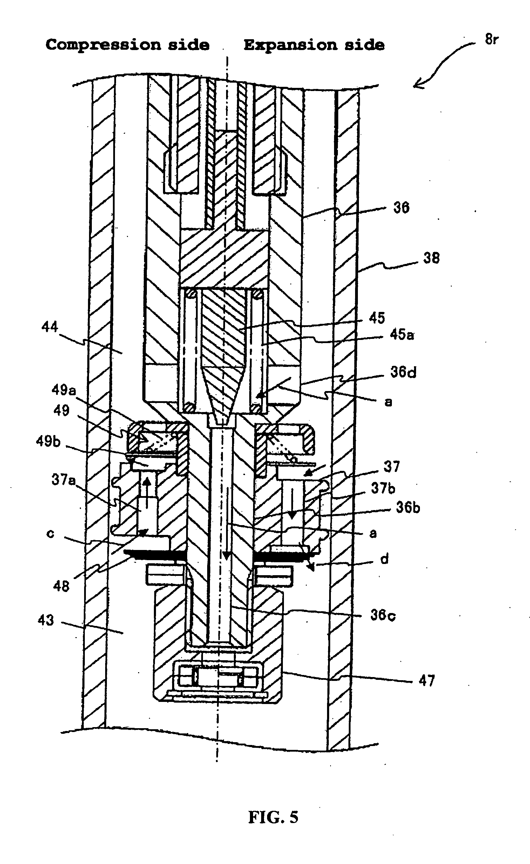

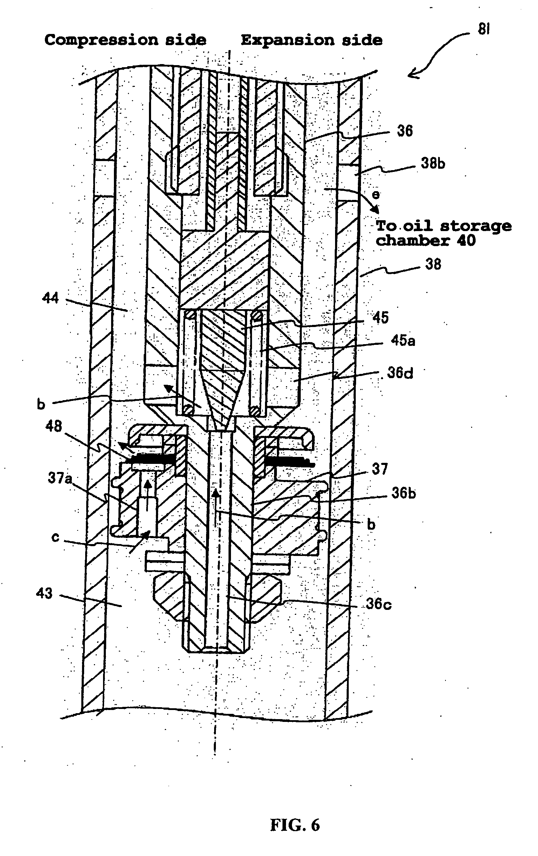

FIG. 3 is a general cross-sectional view illustrating a first front fork of the above motorcycle. FIG. 4 is a general cross-sectional view illustrating a second front fork of the above motorcycle. In the description of FIG. 3 and FIG. 4, the common configuration of the first front fork 8r and the second front fork 81 are mainly described, and the parts with different configurations are mainly described later in the description of FIG. 5 and FIG. 6 (essential-part cross-sectional views). Also, in FIG. 3 and FIG. 4, those parts corresponding to the components shown in FIG. 1 and FIG. 2 are designated by the same reference numerals as those in FIG. 1 and FIG. 2.

As shown in FIG. 3 and FIG. 4, each of the first front fork 8r and the second front fork 81 has an inner tube 9, an outer tube 10, a piston rod 36, a piston 37, a cylinder 38, a stepping motor 39 as an actuator, and so on.

An oil storage chamber 40 is formed in a space defined in the inner tube 9 and the outer tube 10. An upper end seal part 41 is fitted in the upper end of the inner tube 9. A motor holding part 42 for holding the stepping motor 39 is fitted in the upper end seal part 41.

The piston rod 36 has one end attached to the inner tube 9 via the stepping motor 39, the motor holding part 42 and the upper end seal part 41, and the other end connected to the piston 37. The piston 37 is slidably fitted in the cylinder 38. The cylinder 38 is disposed in the inner tube 9 and the outer tube 10 and attached to the outer tube 10. The piston rod 36 has a bracket part 36a to which the upper end of a spring 46 is fixed. The spring 46 has a lower end fixed to the upper end of the outer tube 10 and has a function of buffering the shock applied to the front wheel 14 shown in FIG. 1 and FIG. 2.

The flow of oil is described later. A first oil chamber 43 is formed between the piston 37 and the cylinder 38, and a second oil chamber 44 is formed on the opposite side of the first oil chamber 43 with respect to the piston 37. The first oil chamber 43 of each of the first front fork 8r and the second front fork 81 is communicated with the oil storage chamber 40 through a communication hole 38a formed in a lower part of the cylinder 38.

In a lower part of the cylinders 38 of the first front fork 8r and the second front fork 81, one-way valves 38c and 38c, which function as regulating mechanisms of the present invention just as a one-way valve, which is described later, provided on the piston rod 36 of the first front fork 8r are disposed.

In this embodiment, communication holes 38b for communicating the second oil chamber 44 and the oil storage chamber 40 are formed through an upper part of the cylinder 38 only in the second front fork 81.

Oil flows between the first oil chamber 43 and the second oil chamber 44 with its flow rate (the width of the flow path) controlled by a needle 45 with sliding movement of the inner tube 9 relative to the outer tube 10. Here, the stepping motor 39 moves the needle 45 up and down to adjust the flow rate of oil flowing between the first oil chamber 43 and the second oil chamber 43. Each of the first front fork 8r and the second front fork 81 thereby generates a damping force required thereto.

Each of the outer tubes 10 has three fixing parts 18 for use in fixing the front fender 17 and two caliper holding parts 13 for fixing and supporting the corresponding brake caliper 12, shown in FIG. 1 and FIG. 2, formed integrally with the periphery of the outer tube.

FIG. 5 is a part cross-sectional view illustrating the flow of oil in the first front fork 8r. FIG. 6 is a part cross-sectional view illustrating the flow of oil in the second front fork 81. In FIG. 5 and FIG. 6, the flow of oil when the front forks are on the compression-side is shown on the left side of the dot-and-dash line, and the flow of oil when the front forks are on the expansion-side is shown on the right side of the dot-and-dash line.

In FIG. 5 and FIG. 6, the piston rod 36 has a tip part 36b to which the piston 37 is connected, and a flow path 36c is formed through the tip part 36b. A flow path 36d is formed above the tip part 36b of the piston rod 36. The first oil chamber 43 and the second oil chamber 44 are communicated with each other through the flow paths 36c and 36d and so on.

A one-way valve 47 as a regulating mechanism for regulating the flow direction of oil, just as the one-way valve 38c disposed in a lower part of the cylinder 38, is disposed at the lower end of the piston rod 36 of the first front fork 8r shown in FIG. 5. The one-way valve 47 permits oil to flow only downward (arrows a) through the flow paths 36c and 36d formed through the piston rod 36 when the first front fork 8r is on the expansion side. Also, the one-way valve 47 is removably threaded on the lower end of the piston rod 36 as an "end of flow path."

When the first front fork 8r is on the compression side (the left side in FIG. 5), the one-way valve 47 does not permit oil to flow upward therethrough. Therefore, oil flows only downward (arrows a) through the flow paths 36c and 36d of the first front fork 8r only on the expansion-side.

In this embodiment, a one-way valve is not provided at the end of the piston rod 36 in the second front fork 81 shown in FIG. 6. However, the one-way valve 38c disposed in a lower part of the cylinder 38 permits oil to flow only upward (arrows b) through the flow paths 36c and 36d of the piston rod 36 on the compression-side. On the expansion-side, oil flows from the second oil chamber 44 to the oil storage chamber 40 (arrow e) through the communication holes 38b of the cylinder 38 since through holes corresponding to expansion-side through holes 37b of the first front fork 8r shown in FIG. 5 are not formed.

Therefore, the needle 45 of the first front fork 8r shown in FIG. 5 (expansion-side shown on the right side) adjusts the damping force when the front forks 8 are expanded, and the needle 45 of the second front fork 81 shown in FIG. 6 (compression-side shown on the left side) adjusts the damping force when the front forks 8 are contracted. A needle spring 45a for preventing displacement of the needle 45 caused, in particular, by a shock during compression is provided around each of the needles 45 of the first front fork 8r and the second front fork 81.

At this time, it is desirable that a control means (not shown) such as an ECU (engine control unit) should control (moves up and down, in this embodiment) the needle 45 by actuating the stepping motor 39 based on the speed of the motorcycle 1 and so on.

When the speed of the motorcycle 1 is employed as the adjusting element or parameter of the needle 45, it is desirable that the needle 45 should be moved downward to decrease the flow rate of oil at the needle 45 during high-speed running. It is also desirable that the flow rate of oil at the needle 45 should be increased during low-speed running. Then, running of the motorcycle 1 can be comfortable whether during high-speed running when the front wheel 14 is likely to receive a shock every unit time or during low-speed running when the front wheel 14 is less likely to receive a shock every unit time.

In the first front fork 8r and the second front fork 81, oil is also caused to flow from the first oil chamber 43 to the second oil chamber 44 (arrows c) through, for example, four compression-side through holes 37a formed through the piston 37 on the compression-side. On the expansion-side, oil is caused to flow from the second oil chamber 44 to the first oil chamber 43 (arrows d) through, for example, four expansion-side through holes 37b only in the first front fork 8r.

The expansion-side through holes 37b of the first front fork 8r and the compression-side through holes 37a of the second front fork 81 appear closed in FIG. 5 and FIG. 6. The expansion-side through holes 37b and the compression-side through holes 37a are closed by plate springs 48. The plate springs 48 exert a downward damping force (arrows d) and an upward damping force (arrows c), that is, a damping force on the expansion-side and a damping force on the compression-side, at the expansion-side through holes 37b of the first front fork 8r and the compression-side through holes 37a of the second front fork 81, respectively. The damping valves of the present invention are constituted of the plate springs 48, the through holes 37a and 37b and so on.

In the first front fork 8r, a spring valve 49 having a spring 49a and a plate member 49b is provided above the compression-side through holes 37a and the expansion-side through holes 37b of the piston 37. This is also a part of the damping valve of the present invention which regulates the flow rate of oil in the compression-side through holes 37a and the expansion-side through holes 37b to exert a damping force.

According to the present invention, since the one-way valve 47 disposed in the flow paths 36c and 36d connecting the first oil chamber 43 and the second oil chamber 44 in the cylinder 38 for permitting oil to flow only in one direction is provided, only either compression-side damping or expansion-side damping can be performed by the needle 45 disposed in the flow paths 36c and 36d. Therefore, generation of irregular flows of oil at the needle 45 which interfere with desired damping force adjustment can be prevented effectively. As a result, according to this embodiment, a hydraulic shock absorber 11 capable of exerting a desired damping force more accurately and a motorcycle 1 provided with the hydraulic shock absorber 11 can be provided.

In addition, the flow direction of oil along the needle 45 is opposite (arrows a and b) in the first front fork 8r and the second front fork 81, and is limited to only one direction in each of the front forks 8r and 81. Therefore, the first front fork 8r and the second front fork 81 do not require a complicated mechanism which allows oil to flow in both directions along the needle 45. As a result, the costs of the hydraulic shock absorber 11 and the motorcycle 1 can be reduced.

Also, since the one-way valve 47 is removably attached to an end of the flows paths 36c and 36d formed through the piston rod 36 of the first front fork 8r, the one-way valve 47 can be attached and removed easily. Therefore, assembly of the hydraulic shock absorber 11 can be facilitated and, consequently, assembly of the motorcycle 1 can be facilitated.

In addition, the piston 37 of the first front fork 8r has the through holes 37b, the plate spring 48 and so on for permitting flow in the same direction as the direction in which oil flows through the one-way valve 47 (arrows d), and the piston 37 of the second front fork 81 has the through holes 37a, the plate spring 48 and so on for permitting flow in the opposite direction to the direction in which oil flows through the one-way valve 47 of the first front fork 8r (arrows c). The occurrence of irregular flow of oil at the needle 45 can be thereby prevented more effectively. As a result, a desired damping force can be exerted more accurately.

The outer tubes 10 support the front wheel 14 (wheel) of the motorcycle 1, and the inner tubes 9 are supported on the axle brackets 6 side (body frame side) . Thus, the bosses such as the caliper holding parts 13 and the fixing parts 18 for the fender 17 on the front forks 8 can be formed integrally with the outer tubes 10 by casting or the like. As a result, the costs of the hydraulic shock absorber 11 and the motorcycle 1 can be reduced.

Also, since the stepping motor 39 is employed as an actuator, fine adjustment of the needles 45 can be easily made. Therefore, a desired damping force at the needle 45 can be adjusted accurately.

In addition, since the stepping motor (actuator) 39 is located above the spring 46 interposed between the piston rod 36 and the cylinder 38, the distance between a control means (not shown) for actuating the stepping motor 39 based on the speed of the motorcycle 1 and so on and the stepping motor 39 can be small. Therefore, the length of wires such as codes can be decreased. As a result, the costs of the hydraulic shock absorber 11 and the motorcycle 1 can be reduced.

In this embodiment, the front forks 8 are of the upright type. However, even when the front forks 8 are inverted front forks having an outer tube 10 for supporting a front wheel 14 and an inner tube 9 supported on the body frame side, damping adjustment can be made with the needles 45.

Although this embodiment is described with an example in which a damping adjustment part according to the present invention is the needle 45, anything that can adjust the flow rate of oil flowing between the first oil chamber 43 and the second oil chamber 44 (through the flow paths 36c and 36d) can be used instead of the needle 45.

Although this embodiment is described with an example in which the stepping motor 41 is used as an actuator, any actuator can be used as long as it can adjust the damping force at the damping adjustment part such as the needle 45. For example, when a solenoid is used as the actuator, the flow rate of oil at the damping adjustment part such as the needle 45 can be changed rapidly.

In addition, the damping force according to the present invention can be adjusted properly when an actuator is disposed in only one of the first front fork 8r and second front fork 81 and the flow rate of oil is adjusted manually by controlling the needle (damping adjustment part) 45 or the like in the other front fork.

### Description of Reference Numerals

- 1:: motorcycle
- 2:: main frame
- 3:: head pipe
- 4:: seat rail
- 5:: steering shaft
- 6(6u, 6d):: axle bracket
- 7:: grip
- 8:: front fork
- 8r:: first front fork
- 81:: second front fork
- 9:: inner tube
- 10:: outer tub
- 11:: hydraulic shock absorber
- 12:: brake caliper
- 13:: caliper holding part
- 14:: front wheel (wheel)
- 15:: axle
- 16:: windshield
- 17:: front fender
- 18:: fixing part
- 19:: fuel tank
- 21:: seat
- 22:: engine
- 23:: radiator
- 24:: rear arm
- 25:: rear wheel
- 26:: support part
- 27:: rear suspension
- 28:: upper attachment part
- 29:: rod member
- 31:: lower attachment part
- 32:: rocking member
- 33:: main frame support part
- 34:: rear arm support part
- 35:: connecting member
- 36:: piston rod
- 36a:: bracket part
- 36b:: tip part
- 36c, 36d:: flow path
- 37:: piston
- 37a:: compression-side through hole (damping valve)
- 37b:: expansion-side through hole (damping valve)
- 38:: cylinder
- 38a,: 38b: communication hole
- 38c:: one-way valve (regulating mechanism)
- 39:: stepping motor (actuator)
- 40:: oil storage chamber
- 41:: upper end seal part
- 42:: motor holding part
- 43:: first oil chamber
- 44:: second oil chamber
- 45:: needle (damping adjustment part)
- 45a:: needle spring
- 46:: spring
- 47:: one-way valve (regulating mechanism)
- 48:: plate spring (damping valve)
- 49:: spring valve (damping valve)
- 49a:: spring
- 49b:: plate member

## Claims

1. A hydraulic shock absorber (11) comprising a first front fork (8r) and a second front fork (81), wherein each of the first and second front forks (8r, 81) comprises:
an outer tube (10);
an inner tube (9) slidably fitted in the outer tube (10);
a cylinder (38) disposed in at least one of the outer tube (10) and the inner tube (9);
a piston (37) slidably fitted in the cylinder (38);
a piston rod (36) having one end attached to one of the inner tube (9) and the outer tube (10), and the other end connected to the piston (37);
first and second oil chambers (43, 44) located on opposite sides of the piston (37), and
a damping adjustment part (45) disposed in a flow path (36c, 36d) connecting the first oil chamber (43) and the second oil chamber (44) for adjusting the flow rate of oil flowing through the flow path (36c, 36d);
an actuator (39) for adjusting the damping force of the damping adjustment part (45); and
a regulating mechanism (38c, 47) for permitting the oil to flow in only one direction through the flow path (36c, 36d),
**characterised in that** the piston (37) of the first front fork (8r) has a damping valve (48) for allowing a flow in the same direction as the direction in which the oil flows through the regulating mechanism (47), and the piston (37) of the second front fork (81) has a damping valve (48) for allowing a flow in the opposite direction to the direction in which the oil flows through the regulating mechanism (47) of the first front fork (8r).

2. The hydraulic shock absorber (11) according to Claim 1, wherein the cylinder (38) is coupled to the outer tube (10).

3. The hydraulic shock absorber (11) according to Claim 1 or 2, wherein the flow path (36c, 36d) is formed through the piston rod (36), and the regulating mechanism (47) is removably attached to an end of the flow path (36c, 36d).

4. The hydraulic shock absorber (11) according to any preceding Claim, wherein the outer tube (10) supports a wheel (14) of the motorcycle (1), and the inner tube (9) is supported on the side of a body frame (2).

5. The hydraulic shock absorber (11) according to any preceding Claim, wherein the actuator (39) comprises a stepping motor.

6. The hydraulic shock absorber (11) according to any preceding Claim, wherein the actuator (39) comprises a solenoid.

7. The hydraulic shock absorber (11) according to any preceding Claim, wherein the actuator (39) is provided in at least one of the first front fork (8r) and the second front fork (81).

8. The hydraulic shock absorber (11) according to any preceding claim, wherein the actuator (39) is located internally of the shock absorber (11) to actuate the damping adjustment part (45) from inside the hydraulic shock absorber (11).

9. The hydraulic shock absorber (11) according to any preceding claim, wherein the damping adjustment part (45) comprises a needle.

10. A motorcycle (1) provided with a hydraulic shock absorber (11) according to any preceding Claim.

## Patentansprüche

1. Hydraulischer Stoßdämpfer (11), der eine erste Vorderradgabel (8r) und eine zweite Vorderradgabel (81) umfasst, wobei sowohl die erste als auch die zweite Vorderradgabel (8r, 81) Folgendes umfasst:
ein äußeres Rohr (10),
ein inneres Rohr (9), das verschiebbar in das äußere Rohr (10) gepasst ist,
einen Zylinder (38), der in wenigstens dem äußeren Rohr (10) und/oder dem inneren Rohr (9) angeordnet ist,
einen Kolben (37), der verschiebbar in den Zylinder (38) gepasst ist,
eine Kolbenstange (36), die das eine Ende entweder an dem inneren Rohr (9) oder an dem äußeren Rohr (10) befestigt und das andere Ende mit dem Kolben (37) verbunden hat,
eine erste und eine zweite Ölkammer (43, 44), die auf entgegengesetzten Seiten des Kolbens (37) angeordnet sind, und
einen Dämpfungseinstellungsteil (45), der in einer Durchflussbahn (36c, 36d) angeordnet ist, welche die erste Ölkammer (43) und die zweite Ölkammer (44) verbindet, um die Durchflussgeschwindigkeit von Öl, das durch die Durchflussbahn (36c, 36d) fließt, einzustellen,
ein Stellglied (39) zum Einstellen der Dämpfungskraft des Dämpfungseinstellungsteils (45); und
einen Regulierungsmechanismus (38c, 47), um zu ermöglichen, dass das Öl in nur einer Richtung durch die Durchflussbahn (36c, 36d) fließt,
**dadurch gekennzeichnet, dass** der Kolben (37) der ersten Vorderradgabel (8r) ein Dämpfungsventil (48) hat, um einen Durchfluss in derselben Richtung wie die Richtung, in der das Öl durch den Regulierungsmechanismus (47) fließt, zu ermöglichen, und der Kolben (37) der zweiten Vorderradgabel (81) ein Dämpfungsventil (48) hat, um einen Durchfluss in entgegengesetzten Richtung wie die Richtung, in der das Öl durch den Regulierungsmechanismus (47) der ersten Vorderradgabel (8r) strömt, zu ermöglichen.

2. Hydraulischer Stoßdämpfer (11) nach Anspruch 1, wobei der Zylinder (38) an das äußere Rohr (10) gekoppelt ist.

3. Hydraulischer Stoßdämpfer (11) nach Anspruch 1 oder 2, wobei die Durchflussbahn (36c, 36d) durch die Kolbenstange (36)geformt ist und der Regulierungsmechanismus (47) abnehmbar an einem Ende der Durchflussbahn (36c, 36d) befestigt ist.

4. Hydraulischer Stoßdämpfer (11) nach einem der vorhergehenden Ansprüche, wobei das äußere Rohr (10) ein Rad (14) des Motorrades (1) stützt und das innere Rohr (9) an der Seite eines Karosserierahmens (2) gestützt wird.

5. Hydraulischer Stoßdämpfer (11) nach einem der vorhergehenden Ansprüche, wobei das Stellglied (39) einen Schrittmotor umfasst.

6. Hydraulischer Stoßdämpfer (11) nach einem der vorhergehenden Ansprüche, wobei das Stellglied (39) eine Zylinderspule umfasst.

7. Hydraulischer Stoßdämpfer (11) nach einem der vorhergehenden Ansprüche, wobei das Stellglied (39) in wenigstens der ersten Vorderradgabel (8r) und/oder der zweiten Vorderradgabel (81) bereitgestellt wird.

8. Hydraulischer Stoßdämpfer (11) nach einem der vorhergehenden Ansprüche, wobei das Stellglied (39) innerhalb des Stoßdämpfers (11) angeordnet ist, um den Dämpfungseinstellungsteil (45) von innerhalb des Stoßdämpfers (11) zu betätigen.

9. Hydraulischer Stoßdämpfer (11) nach einem der vorhergehenden Ansprüche, wobei der Dämpfungseinstellungsteil (45) eine Nadel umfasst.

10. Motorrad (1), das mit einem hydraulischen Stoßdämpfer (11) nach einem der vorhergehenden Ansprüche versehen ist.

## Revendications

1. Absorbeur de chocs hydraulique (11), comprenant une première fourche avant (8r) et une deuxième fourche avant (81), chacune des première et deuxième fourches avant (8r, 81) comprenant :
un tube externe (10) ;
un tube interne (9) ajusté de manière coulissante dans le tube externe (10) ;
un cylindre (38), agencé dans au moins un tube, le tube externe (10) ou le tube interne (9) ;
un piston (37), ajusté de manière coulissante dans le cylindre (38) ;
une tige de piston (36), comportant une extrémité fixée sur l'un des tubes, le tube interne (9) ou le tube externe (10), l'autre extrémité étant connectée au piston (37) ;
des première et deuxième chambres d'huile (43, 44), agencées sur les côtés opposés du piston (37) ; et
une partie d'ajustement de l'amortissement (45) agencée dans une trajectoire d'écoulement (36c, 36d) connectant la première chambre d'huile (43) et la deuxième chambre d'huile (44), pour ajuster le débit de l'huile s'écoulant à travers la trajectoire d'écoulement (36c, 36d) ;
un actionneur (39) pour ajuster la force d'amortissement de la partie d'ajustement de l'amortissement (45) ; et
un mécanisme de régulation (38c, 47) pour permettre l'écoulement de l'huile uniquement dans une seule direction à travers la trajectoire d'écoulement (36c, 36d) ;
**caractérisé en ce que** le piston (37) de la première fourche avant (8r) comporte une soupape d'amortissement (48), pour permettre un écoulement dans la même direction que la direction dans laquelle l'huile s'écoule à travers le mécanisme de régulation (47), le piston (37) de la deuxième fourche avant (81) comportant une soupape d'amortissement (48) pour permettre un écoulement dans la direction opposée à la direction dans laquelle l'huile s'écoule à travers le mécanisme de régulation (47) de la première fourche avant (8r).

2. Absorbeur de chocs hydraulique (11) selon la revendication 1, dans lequel le cylindre (38) est accouplé au tube externe (10).

3. Absorbeur de chocs hydraulique (11) selon les revendications 1 ou 2, dans lequel la trajectoire d'écoulement (36c, 36d) est formée à travers la tige de piston (36), le mécanisme de régulation (47) étant fixé de manière amovible sur une extrémité de la trajectoire d'écoulement (36c, 36d).

4. Absorbeur de chocs hydraulique (11) selon l'une quelconque des revendications précédentes, dans lequel le tube externe (10) supporte une roue (14) du motocycle (1), le tube interne (9) étant supporté sur le côté d'un châssis de la carrosserie (2).

5. Absorbeur de chocs hydraulique (11) selon l'une quelconque des revendications précédentes, dans lequel l'actionneur (39) comprend un moteur pas-à-pas.

6. Absorbeur de chocs hydraulique (11) selon l'une quelconque des revendications précédentes, dans lequel l'actionneur (39) comprend un solénoïde.

7. Absorbeur de chocs hydraulique (11) selon l'une quelconque des revendications précédentes, dans lequel l'actionneur (39) est agencé dans au moins une fourche, la première fourche avant (8r) ou la deuxième fourche avant (81).

8. Absorbeur de chocs hydraulique (11) selon l'une quelconque des revendications précédentes, dans lequel l'actionneur (39) est agencé à l'intérieur de l'absorbeur de chocs (11), pour actionner la partie d'ajustement de l'amortissement (45) à partir de l'intérieur de l'absorbeur de chocs hydraulique (11).

9. Absorbeur de chocs hydraulique (11) selon l'une quelconque des revendications précédentes, dans lequel la partie d'ajustement de l'amortissement (45) comprend un pointeau.

10. Motocycle (1) comportant un absorbeur de chocs hydraulique (11) selon l'une quelconque des revendications précédentes.
